# EUROPÄISCHE PATENTANMELDUNG

(11) **EP 3 241 600 A1**
(43) Veröffentlichungstag der Anmeldung: **08.11.2017**
(21) Anmeldenummer: 17167398.1
(22) Anmeldetag: 20.04.2017
(51) Int. Cl.: B01D 33/073, B01D 33/41, B01D 33/46, B01D 33/80

(54) **FILTERVORRICHTUNG FÜR PÖKELLAKE**

(30) Priorität: 03.05.2016 DE 202016102342 U
(71) Anmelder: Schröder Maschinenbau KG, 33824 Werther (DE)
(72) Erfinder: Danwerth, Peter J., 33803 Steinhagen (DE)
(74) Vertreter: Ter Meer Steinmeister & Partner

(57) **Zusammenfassung**

Filtervorrichtung für Flüssigkeit, insbesondere für Pökellake, mit einem Gehäuse (10), in dem zwei Trommelfilter (12, 14) drehbar gelagert sind und das für jeden Trommelfilter einen Zulauf (22) für die zu filternde Flüssigkeit, eine Auffangwanne (32, 34) für das Filtrat und einen Abstreifer (28) und einen Sammelbehälter (30) für das Retentat aufnimmt, dadurch gekennzeichnet, dass die Trommelfilter (12, 14) als Grobfilter (18) und Feinfilter (20) in Reihe hintereinander geschaltet sind.

## Beschreibung

Die Erfindung betrifft eine Filtervorrichtung für Flüssigkeit, insbesondere für Pökellake, mit einem Gehäuse, in dem zwei Trommelfilter drehbar gelagert sind und das für jeden Trommelfilter einen Zulauf für die zu filternde Flüssigkeit, eine Auffangwanne für das Filtrat und einen Abstreifer und einen Sammelbehälter für das Retentat aufnimmt.

Filtervorrichtungen dieser Art sind aus der Praxis bekannt und dienen beispielsweise dazu, die von einer Pökelmaschine für Fleisch oder andere Lebensmittelprodukte zurückgeführte Lake zu reinigen und von Fleischrückständen zu befreien, bevor sie wieder der Pökelmaschine zugeführt wird. Durch den parallelen Betrieb zweier Trommelfilter in einem gemeinsamen Gehäuse soll bei diesen bekannten Filtervorrichtungen eine hohe Filterleistung erreicht werden.

Ein poröses Filtermedium, zumeist in der Form eines Kantenspaltfilters, bildet die Mantelfläche der Trommel jedes Trommelfilters. Die Lake wird im Bereich des oberen Scheitels der Trommel von außen auf die Mantelfläche geleitet und fließt durch die Spalten des Kantenspaltfilters in das Innere der Trommel, während die Fleischrückstände und andere Verunreinigungen an der Außenfläche der Trommel zurückgehalten werden. Durch kontinuierliches oder intermittierendes Drehen der Trommel werden die zurückgehaltenen Verunreinigungen, das Retentat, zu einem seitlich an der Trommel angeordneten Abstreifer transportiert und dort von der Trommel abgestreift, so dass sie in den Sammelbehälter fallen. Das Filtrat tritt im Bereich des unteren Scheitels der Trommel durch den Kantenspaltfilter hindurch in die Auffangwanne aus und bewirkt dabei zugleich eine gewisse Regeneration des Filters.

Dennoch kommt es bei längerem Betrieb zu einer zunehmenden Verstopfung der Filteröffnungen, im Fall eines Kantenspaltfilters also der Filterspalte, so dass von Zeit zu Zeit eine Reinigung der Trommeln erforderlich ist.

Aufgabe der Erfindung ist es, eine Filtervorrichtung zu schaffen, die eine hohe Filterleistung ermöglicht und einen geringeren Wartungsaufwand erfordert.

Diese Aufgabe wird erfindungsgemäß dadurch gelöst, dass die Trommelfilter als Grobfilter und Feinfilter in Reihe hintereinander geschaltet sind.

Bei der erfindungsgemäßen Vorrichtung werden die Trommelfilter also nicht parallel betrieben, sondern die gesamte Lake fließt zunächst durch den als Grobfilter ausgebildeten Trommelfilter und danach durch den Feinfilter.

Die Abnahme der Filterleistung, die wegen des Verzichts auf zwei parallel arbeitende Trommeln dem ersten Anschein nach zu erwarten wäre, wird dadurch kompensiert oder gar überkompensiert, dass die Flüssigkeit die Trommelfilter mit einem größeren Volumendurchsatz durchströmt. Bei dem Grobfilter wird der größere Volumenstrom durch die größeren Filterporen bzw. -spalte ermöglicht. Bei dem Feinfilter wird ein höherer Volumenstrom dadurch ermöglicht, dass die Flüssigkeit bereits im Grobfilter vorgefiltert wurde und somit keine größeren Verunreinigungspartikel mehr enthält. Das führt dazu, dass sich auf der Außenfläche der Feinfilter-Trommel wesentlich langsamer ein Filterkuchen aufbaut, der den Durchtritt der Flüssigkeit behindert.

Darüber hinaus wird bei der erfindungsgemäßen Vorrichtung der Wartungsaufwand reduziert, da sich bei den in regelmäßigen Abständen durchgeführten Reinigungsarbeiten zumindest der Grobfilter schneller und leichter reinigen lässt oder ggf. nur in größeren Intervallen gereinigt zu werden braucht als der Feinfilter.

Vorteilhaft ist außerdem, dass durch die zweistufige Filterung eine bessere Entwässerung des Retentats erreicht wird. Da im Grobfilter nur die verhältnismäßig großen Verunreinigungspartikel zurückgehalten werden, gibt es zwischen diesen Partikeln größere Zwischenräume, die ein leichteres Abfließen der Flüssigkeit ermöglichen, zumal auch die Spalte des Filters deutlich breiter sind. Bei dem Feinfilter baut sich der Filterkuchen langsamer auf, da die Flüssigkeit bereits von groben Schmutzpartikeln befreit wurde. Auf dem Weg von der Zufuhrstelle der Flüssigkeit bis zum Abstreifer erreicht der Filterkuchen nur eine wesentlich geringere Dicke, wodurch auch hier eine schnellere und wirksamere Entwässerung ermöglicht wird.

Vorteilhafte Ausgestaltungen und Weiterbildungen der Erfindung sind in den Unteransprüchen angegeben.

In einer vorteilhaften Ausführungsform sind die Trommeln so angeordnet, dass sie zu Reinigungszwecken aus dem Gehäuse heraus geschwenkt werden können. Dadurch werden die Reinigungsarbeiten wesentlich erleichtert und es wird die Gefahr vermieden, dass Reinigungsflüssigkeit in die Auffangwannen und damit in den Lakekreislauf gelangt.

Im folgenden wird ein Ausführungsbeispiel anhand der Zeichnung näher erläutert.

Es zeigen:
- Fig. 1: einen schematischen Schnitt durch eine erfindungsgemäße Filtervorrichtung; und
- Fig. 2 bis 4: Schnitte durch die Vorrichtung nach Fig. 1 in verschiedenen Stadien während der Vorbereitung eines Reinigungsvorgangs.

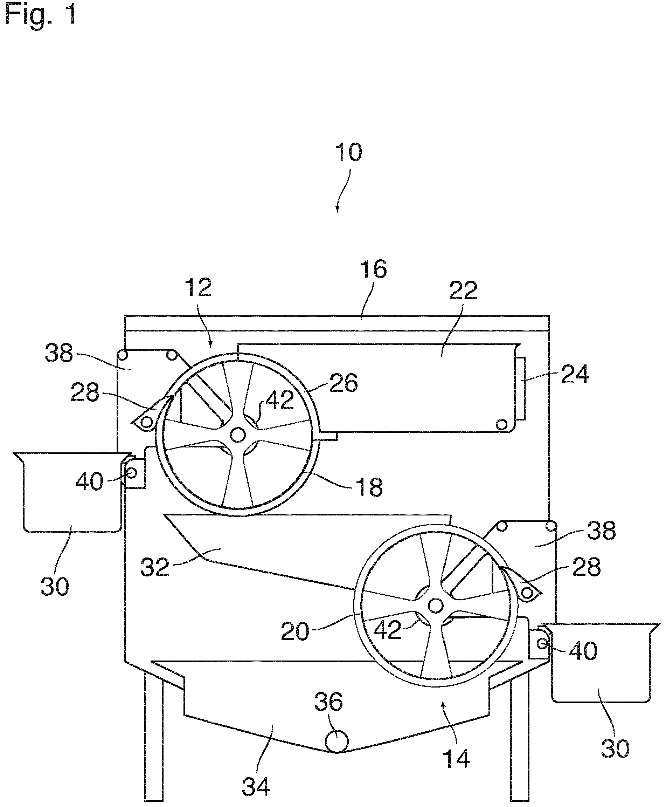

Die in Fig. 1 gezeigte Filtervorrichtung weist ein Gehäuse 10 auf, das zwei in Reihe arbeitende Trommelfilter 12 und 14 aufnimmt. Das Gehäuse 10 ist an der Oberseite durch einen lösbaren Deckel 16 abgeschlossen und ist an zwei gegenüberliegenden Seiten, links und rechts in Fig. 1, zumindest teilweise offen.

Jeder Trommelfilter 12, 14 wird durch eine Trommel gebildet, die drehantreibbar in dem Gehäuse 10 montiert ist und deren Mantelfläche als Kantenspaltfilter ausgebildet ist. Jeder Kantenspaltfilter wird in bekannter Weise durch eine Schar paralleler, prismenförmiger Profilstäbe gebildet, zwischen denen Filterspalte gebildet sind. Bei den hier gezeigten Trommelfiltern verlaufen die Stäbe parallel zur Achse der Trommel.

Die beiden Trommelfilter 12, 14 sind in der Höhe versetzt an entgegengesetzten Seiten des Gehäuses 10 angeordnet. Der Kantenspaltfilter des oberen Trommelfilters 12 ist als Grobfilter 18 ausgebildet, während der Kantenspaltfilter des unteren Trommelfilters 14 einen Feinfilter 20 bildet, bei dem die Filterspalte eine geringere Breite haben als bei dem Grobfilter 18.

Dem oberen Trommelfilter 12 ist ein wannenförmiger Zulauf 22 zugeordnet, der über einen Stutzen 24 an eine nicht gezeigte Lakeleitung anschließbar ist, über die gebrauchte Pökellake von einer Pökelmaschine zurückgeführt wird. Über den wannenförmigen Zulauf 22 wird die Lake gleichmäßig auf der gesamten Länge des Trommelfilters 12 verteilt auf den Grobfilter 18 aufgegeben. An den entgegengesetzten Enden der Trommel und an der Kante des Wannenbodens sind an dem Zulauf 22 Dichtleisten 26 angeordnet, die ein Abfließen der Lake an den Stirnseiten der Trommel verhindern. Die Lake kann somit nur durch die Filterspalte des Grobfilters 18 in das Innere der Trommel fließen.

Auf der dem Zulauf 22 entgegengesetzten Seite des Trommelfilters 12 ist ein lösbarer Abstreifer 28 angeordnet, der elastisch gegen die Trommel vorgespannt ist und das an der Außenfläche des Grobfilters 18 zurückgehaltene Retentat, das vorwiegend aus groben Fleischstücken besteht, von der Trommeloberfläche abstreift. Der Abstreifer 28 bildet zugleich eine Rutsche, über die das abgestreifte Material in einen Sammelbehälter 30 fällt, der an der Außenseite des Gehäuses 10 lösbar eingehängt ist.

An der Unterseite des Trommelfilters 12 ist eine Auffangwanne 32 angeordnet, die das am unteren Scheitel des Trommelfilters 12 durch die Filterspalte des Grobfilters 18 ausfließende Filtrat auffängt.

Die Auffangwanne 32 bildet zugleich einen Zulauf für den unteren Trommelfilter 14, der im übrigen spiegelbildlich zu dem Trommelfilter 12 angeordnet ist. Auch dem unteren Trommelfilter 14 ist somit ein Abstreifer 28 und ein Sammelbehälter 30 zugeordnet.

Unterhalb des Trommelfilters 14 ist eine Auffangwanne 34 angeordnet, die an der tiefsten Stelle einen Auslass 36 hat, über den das Filtrat des Feinfilters 20 mit Hilfe einer nicht gezeigten Pumpe zur Pökelmaschine zurückgepumpt wird.

Durch die spiegelbildliche, in der Höhe versetzte Anordnung der Trommelfilter 12 und 14 werden eine kompakte Gestaltung des Gehäuses 10 sowie ein einfacher und bequemer Zugang zu den Abstreifern 28 und den Sammelbehältern 30 der beiden Filterstufen ermöglicht.

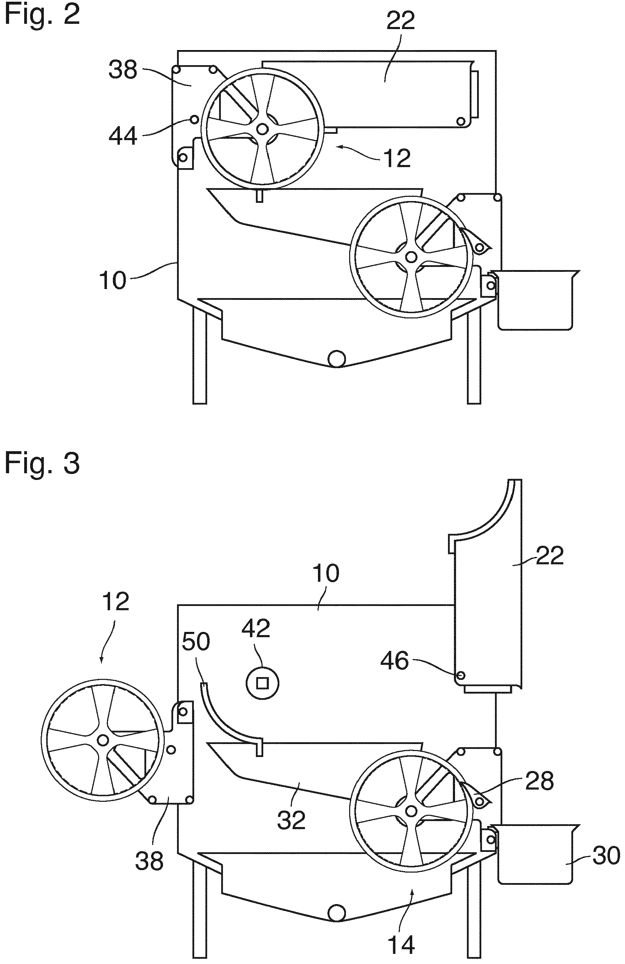

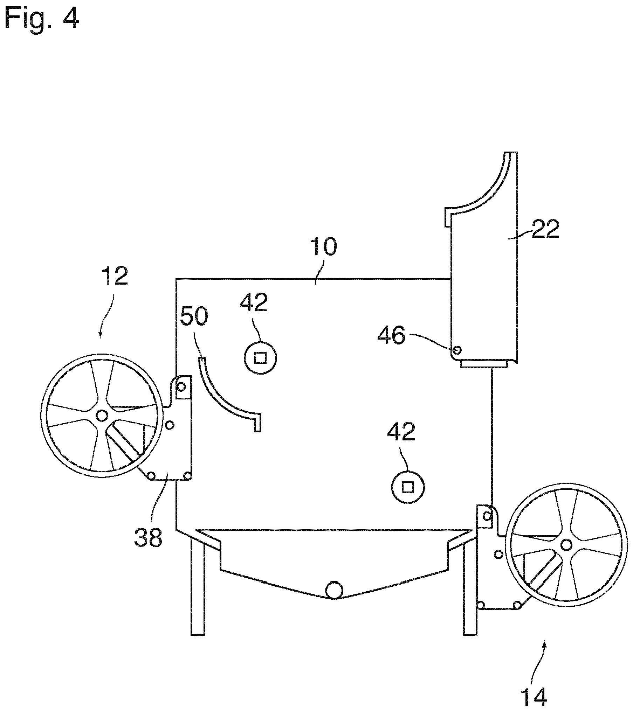

Die Trommel jedes der beiden Trommelfilter 12, 14 ist drehbar in einer Schwenkgabel 38 gelagert, die ihrerseits um eine Achse 40 schwenkbar im Gehäuse 10 gehalten ist. Der Drehantrieb der Trommelfilter 12 und 14 erfolgt über Kupplungen 42 (Fig. 3 und 4), in die ein auf der Achse jeder Trommel gebildeter Vierkant einsteckbar ist. Wenn die Kupplungen gelöst wurden, ist es möglich, die Trommeln der beiden Trommelfilter mit Hilfe der Schwenkgabeln 38 nach entgegengesetzten Seiten aus dem Gehäuse 10 herauszuschwenken, so dass Reinigungsarbeiten leichter durchgeführt werden können. Wahlweise könnte der Antrieb auch reibschlüssig oder durch magnetische Kopplung erfolgen.

Der Vorgang des Herausschwenkens soll nachstehend anhand der Fig. 2 bis 4 näher erläutert werden.

In Fig. 2 ist die Vorrichtung in verkleinertem Maßstab in einem Zustand gezeigt, in dem bereits erste Vorbereitungen für einen Reinigungsvorgang getroffen wurden. Insbesondere wurden der Deckel 16 und der Sammelbehälter 30 für den Trommelfilter 12 entfernt. Auch der Abstreifer 28 für diesen Trommelfilter wurde entfernt und beispielsweise an einem nicht gezeigten Aufhänger an einer Außenwand des Gehäuses 10 aufgehängt. In Fig. 2 sieht man deshalb nur noch ein Lager 44, mit dem sich der Abstreifer lösbar in der Schwenkgabel 38 befestigen lässt.

Da nun der Sammelbehälter 30 nicht mehr in die Schwenkgabel 38 eingreift, lassen sich die Schwenkgabel und die Trommel etwas in Axialrichtung verschieben, so dass der erwähne Vierkant aus der Kupplung 42 austritt.

Damit jedoch der Trommelfilter 12 mit Hilfe der Schwenkgabel 38 ausgeschwenkt werden kann, muss zunächst der Zulauf 22 in eine Position gebracht werden, in der er die Schwenkbewegung nicht stört. Wie Fig. 3 zeigt, wird zu diesem Zweck der Zulauf 22 um 90° um eine Schwenkachse 46 nach oben geschwenkt. Das ermöglicht es, den Trommelfilter 12 mit Hilfe der Schwenkgabel 38 um 180° nach außen zu schwenken, wie ebenfalls in Fig. 3 gezeigt ist. Die Trommel liegt dann vollständig außerhalb des Gehäuses 10 und kann deshalb problemlos gereinigt werden. Im Gehäuse 10 bleiben nur die Kupplung 42 sowie Dichtleisten 50 zurück, die die Trommel an den stirnseitigen Enden abdichten und zugleich einen Sitz zur Lagerung der Trommel in der Betriebsstellung bilden.

Um auch die Reinigung des unteren Trommelfilters 14 zu ermöglichen, werden auch der diesem Trommelfilter zugeordnete Sammelbehälter 30 und der Abstreifer 28 entfernt. Ebenso wird die Auffangwanne 32 für den Trommelfilter 12 entfernt, die zugleich den Zulauf für den Trommelfilter 14 bildet. Die Auffangwanne 32 kann wahlweise ganz entnommen oder in eine Stellung geschwenkt werden, in der sie die Schwenkbewegung des Trommelfilters 14 nicht behindert.

Fig. 4 zeigt die Vorrichtung im reinigungsbereiten Zustand, in dem auch der untere Trommelfilter 14 im 180° nach außen geschwenkt ist.

Die nicht gezeigten Antriebe für die Kupplungen 42 können synchron oder unabhängig voneinander intermittierend oder kontinuierlich arbeiten. Bevorzugt sind unabhängige Antriebe, bei denen es möglich ist, die Drehzahl oder mittlere Drehzahl des Trommelfilters an die Durchlässigkeit des jeweiligen Kantenspaltfilters anzupassen.

## Patentansprüche

1. Filtervorrichtung für Flüssigkeit, insbesondere für Pökellake, mit einem Gehäuse (10), in dem zwei Trommelfilter (12, 14) drehbar gelagert sind und das für jeden Trommelfilter einen Zulauf (22) für die zu filternde Flüssigkeit, eine Auffangwanne (32, 34) für das Filtrat und einen Abstreifer (28) und einen Sammelbehälter (30) für das Retentat aufnimmt, **dadurch gekennzeichnet, dass** die Trommelfilter (12, 14) als Grobfilter (18) und Feinfilter (20) in Reihe hintereinander geschaltet sind.

2. Filtervorrichtung nach Anspruch 1, bei der die Trommelfilter (12, 14) in der Höhe versetzt an entgegengesetzten Seiten des Gehäuses (10) angeordnet sind.

3. Filtervorrichtung nach Anspruch 1 oder 2, bei der die Abstreifer (28) und Sammelbehälter (30) lösbar und in Bezug auf den jeweils zugehörigen Trommelfilter (12, 14) außenseitig am Gehäuse (10) angeordnet sind.

4. Filtervorrichtung nach einem der vorstehenden Ansprüche, bei dem mindestens einer der Trommelfilter (12, 14) drehantreibbar in einer Schwenkgabel (38) gelagert ist, die ihrerseits derart schwenkbar im Gehäuse (10) gehalten ist, dass sich der Trommelfilter mit Hilfe der Schwenkgabel aus dem Gehäuse (10) heraus schwenken lässt.

5. Filtervorrichtung nach Anspruch 4, bei der für den Drehantrieb des schwenkbaren Trommelfilters eine Kupplung (42) vorgesehen ist, die ortsfest am Gehäuse (10) angeordnet und lösbar mit dem Trommelfilter verbindbar ist.

6. Filtervorrichtung nach Anspruch 5, bei der der Sammelbehälter so am Gehäuse (10) gehalten ist, dass er in seiner Betriebsstellung in die Schwenkgabel (38) eingreift und dadurch ein Lösen der Kupplung (42) verhindert.

7. Filtervorrichtung nach Anspruch 3 und einem der Ansprüche 4 bis 6, bei der der Abstreifer (28) für den schwenkbaren Trommelfilter (12) lösbar an der Schwenkgabel (38) angeordnet ist.

8. Filtervorrichtung nach einem der vorstehenden Ansprüche, bei der die Auffangwanne (32) für den Grobfilter (18) zugleich den Zulauf für den Feinfilter (20) bildet.
